(19) Europäisches Patentamt
European Patent Office
Office européen des brevets

(11) **EP 0 980 151 B1**

(12) **EUROPÄISCHE PATENTSCHRIFT**

(45) Veröffentlichungstag und Bekanntmachung des Hinweises auf die Patenterteilung:
**03.01.2001 Patentblatt 2001/01**

(51) Int Cl.$^7$: **H04B 3/46**, H04B 3/48

(21) Anmeldenummer: **98112720.2**

(22) Anmeldetag: **09.07.1998**

(54) **Verfahren zur Dämpfungsmessung in digitalen Übertragungsleitungen**

Method for measuring attenuation in digital transmission lines

Procédé de mesure d'atténuation dans des lignes de transmission numérique

(84) Benannte Vertragsstaaten:
**DE FR GB IT**

(43) Veröffentlichungstag der Anmeldung:
**16.02.2000 Patentblatt 2000/07**

(73) Patentinhaber: **Wandel & Goltermann Management Holding GmbH**
**D-72800 Eningen (DE)**

(72) Erfinder: **Bohley, Rolf, Dipl.-Ing.**
**D-72770 Reutlingen (DE)**

(74) Vertreter: **Klocke, Peter, Dipl.-Ing.**
**Klocke & Späth Patentanwälte,**
**Kappelstrasse 8**
**72160 Horb (DE)**

(56) Entgegenhaltungen:
DE-A- 2 630 357        US-A- 3 903 477
US-A- 5 548 222        US-A- 5 633 709

**Beschreibung**

Die vorliegende Erfindung betrifft ein Verfahren zur Dämpfungsmessung in digitalen Übertragungsleitungen zwischen einer Vermittlungsstelle und einer Teilnehmeranschlußstelle.

Fernmeldenetze werden zunehmend auf breitbandigere digitale Übertragungsverfahren umgestellt. Dies betrifft auch den Teilnehmerzugangsbereich, so daß bei den Femmeldebetreibem die Umstellung von der analogen Sprachübertragung auf ISDN (Integrated Service Digital Network) bereits durchgeführt wird. Gleichzeitig befinden sich noch weitere Verfahren unter dem Sammelbegriff xDSL für Digital Subscriber Line (ADSL = Asymmetrical Digital Subscriber Line, HDSL = High bit rate Digital Subscriber Line, VHDSL = Very High bit rate Digital Subscriber Line) mit wesentlich höheren Bitraten in der Probe. Alle diese Verfahren haben ein gemeinsames Problem, das darin liegt, daß die Teilnehmerzugangsleitungen zum Teil schon vor vielen Jahren verlegt wurden und ursprünglich nur für die Übertragung des Telefonsprachkanals gedacht war. Da diese Leitungen einerseits eine riesige Investition darstellen und andererseits aus Untersuchungen bekannt ist, daß die Leitungen mit gewissen Einschränkungen auch für die neuen Übertragungsverfahren geeignet sind, bemühen sich die Netzbetreiber, ihr bestehendes Leitungsnetz so weit wie möglich auszunutzen. Dazu ist es aber notwendig, die Zugangsleitung für jeden Teilnehmer vor der Umstellung auf ihre Tauglichkeit für die neuen Dienste zu überprüfen. Dies kann auf verschiedene Arten geschehen. Sind im Einzelfall die Daten des verlegten Kabels (Länge, Kabeleigenschaften) bekannt, so läßt sich daraus in den meisten Fällen ableiten, ob die Leitung für die beabsichtigte Nutzung geeignet ist. Sind diese Daten nicht bekannt, wird eine Messung notwendig. Dabei muß neben anderen Eigenschaften auch die Dämpfung gemessen werden, was sehr kostenintensiv ist. Dies liegt daran, daß die Dämpfungsmessung üblicherweise als Streckenmessung durchgeführt wird, wozu man zwei Meßgeräte (Pegelsender und Pegelmesser) an den beiden Leitungsenden benötigt. Außerdem muß sich ein Meßtechniker zum kundenseitigen Leitungsende begeben, was sehr zeitaufwendig sein kann.

Aus der US-A-39 03 477 ist ein Verfahren zur Messung von Netzwerkkenngrößen im Zeitbereich bekannt, bei der ein erster Impuls mit bekanntem Frequenzspektrum an der Meßstelle auf das Meßobjekt gegeben wird. Aus der Vielzahl der in der Meßstelle eingehenden Impulse wird derjenige ausgewählt, der durch die Totalreflexion am Leitungsende einer bestimmten Abschlußstelle verursacht wurde. Anschließend wird das Frequenzsprektum des ausgewählten Impulses ermittelt und aus den Frequenzspektren des ausgesendeten Impulses an den ausgewälten empfangenen Impulsen werden die Parameter des Meßobjektes in Abhängigkeit von der Frequenz ermittelt. Der erste Impuls wird in Form von einzelnen sinusförmigen Signalen über die Übertragungsleitung gesendet.

Der vorliegenden Erfindung liegt die Aufgabe zugrunde, ein Verfahren vorzuschlagen, das die Dämpfungsmessung gegenüber dem bekannten Verfahren erheblich vereinfacht und von einem Leitungsende durchführbar ist.

Diese Aufgabe wird erfindungsgemäß durch ein Verfahren mit den Merkmalen des Anspruchs 1 gelöst.

Gemäß der Erfindung wird ein erster Impuls mit einem bekannten Frequenzspektrum von der Vermittlungsstelle aus auf die Übertragungsleitung gegeben. Aus der Vielzahl der an der Vermittlungsstelle eingehenden Reflexionen wird im Zeitbereich derjeni-ge<Impuls ausgewählt, der durch die Totalreflektionen am Leitungsende einer bestimmten Teilnehmeranschlußstelle verursacht wurde. Anschließend wird das Frequenzspektrum des ausgewählten Impulses ermittelt und aus dem Frequenzspektrum des ausgesandten Impulses und des ausgewählten empfangenen Impulses die Dämpfung der Übertragungsleitung in Abhängigkeit von der Frequenz berechnet.

Gemäß der Erfindung erfolgt die Dämpfungsmessung als Reflexionsmessung. Dies ist möglich, wenn bei der Messung am fernen Ende Totalreflektion auftritt und die Leitung im Betrieb an beiden Enden mit der gleichen Impedanz abgeschlossen wird. Ist das Frequenzspektrum des gesendeten Impulses genau bekannt, so läßt sich aus dem Spektrum des reflektierten Impulses die Dämpfung der Übertragungsleitung in Abhängigkeit von der Frequenz berechnen. Der gesendete Impuls durchläuft die Leitung vom Anfang zum Ende. Dabei werden die Amplituden seiner Spektrallinien entsprechend der Leitungsdämpfung verringert. Am Leitungsende wird der Impuls reflektiert, wobei wegen der Totalreflektion die Amplituden seine Spektrallinien dabei nicht verändert werden. Beim anschließenden Rücklauf durch die gesamte Übertragungsleitung erfährt der Impuls die gleiche Dämpfung wie beim Hinlauf. Wird für eine Frequenz das Verhältnis der Amplituden der entsprechenden Spektrallinien vom hin- und rücklaufenden Impuls gebildet, so ergibt sich das Quadrat der Leitungsdämpfung bei dieser Frequenz. Daraus läßt sich schließlich der gesuchte Dämpfungswert durch Ziehen der Quadratwurzel errechnen. Für die praktische Realisierung bedeutet dies allerdings eine sehr hohe Anforderung an die Dynamik der Meßanordnung.

Die Dämpfung wird vorwiegend durch die Leitungsverluste verursacht. Zu einem kleinen Teil verursachen allerdings auch Reflexionen Leitungsverluste, die bewirken, daß mehrere Impulse zum Eingang der Leitung laufen. Aus diesen zurücklaufenden Impulsen muß derjenige Impuls ausgesucht werden, der durch die Totalreflexion am Leitungsende verursacht wurde. Wenn diese Impulse entsprechend ihren unterschiedlichen Laufzeiten zu verschiedenen Zeitpunkten am Eingang der Leitung eintreffen, ist dies möglich. Die einzelnen Reflexionsstellen müssen allerdings weit auseinander liegen, damit sie bei der jeweiligen Impulsbreite unterscheidbar bleiben. Idealerweise erfolgt die Auswahl des richtigen Impulses durch einen erfahrenen Meßtechniker, der das komplette Reflexionsbild auf dem Bildschirm sieht. Für weniger geübte Bediener oder für automatische Messungen kann die Auswertung jedoch auch komplett durch einen Steuerrechner erfolgen.

Bei tiefen Frequenzen ist der Wellenwiderstand der Leitung komplex. Bei der Reflexion in diesem komplexen Widerstand wird der Phasenwinkel bei unterschiedlichen Frequenzen unterschiedlich stark gedreht und dadurch der Impuls stark verbreitert. Eine besonders störende Reflexion tritt am Leitungsanfang auf, da der zugehörige Impuls nicht durch die Übertragungsleitung gedämpft wird. Dieser Impuls wird so breit, daß er den wesentlich kleineren Impuls von der Reflexion am Ende der Übertragungsleitung überdeckt.

Daher wird, um dem entgegenzuwirken, der Frequenzbereich des Impulses zu höheren Frequenzen verschoben, möglichst so weit, bis der Wellenwiderstand der Leitung in diesem Frequenzbereich nahezu reell ist. Diese Verschiebung ist gleichbedeutend mit der Modulation eines Trägers mit dem Impuls. Ihre Grenzen findet diese Methode darin, daß einerseits die Leitungsdämpfung mit wachsender Frequenz zunimmt und das Nutzsignal somit immer kleiner wird und andererseits die Frequenz, bei der die Dämpfung gemessen werden soll, ebenfalls innerhalb des Spektrums des Impulses liegen muß.

Es wird der erste Impuls in Form einzelner sinusförmiger Signale, deren Frequenz aus dem Frequenzspektrum des ersten Impulses zuvor ermittelt wird, über die Übertragungsleitung gesendet und die Reflexionen im Zeitbereich durch inverse Fouriertransformation des Frequenzsprektrums dieser Reflexionen ermittelt. Damit kann das Impulsspektrum möglichst frei gewählt und trotz kleiner Signalspannung ein sehr großer Impuls erhalten werden. Die Spektrallinien des Impulses werden in Form von sinusförmigen Dauersignalen nacheinander gesendet und der Impuls rechnerisch durch inverse Fouriertransformation seines Frequenzspektrums in dem Frequenzbereich erzeugt. Durch die Wahl der Fensterfunktion wird die Pulsform bestimmt. Obwohl die einzelnen Frequenzen nur mit Spannungen von wenigen Volt an die Leitung gelegt werden, ergibt sich für den Gesamtimpuls eine Höhe von z.B. 100 V. Diese Methode ist grundsätzlich als Frequenzbereichsreflektometer bekannt und sehr unempfindlich gegen impulsförmige Störungen auf der Leitung.

Im Unterschied zu der klassischen Dämpfungsmessung im Frequenzbereich, bei der am Leitungsende die Überlagerung aus der aus Hauptwelle und allen weiteren, durch Mehrfachreflektion entstandenen Wellen gemessen wird, wird bei der Messung mit der Impulsreflektionsmethode dagegen nur die Hauptwelle erfaßt. Außerdem wird nicht die doppelte Dämpfung ("doppelt" im Sinne eines logarithmischen Dämpfungsmaßes) der Übertragungsleitung gemessen, sondern die Dämpfung einer gleichartigen, doppelt so langen Übertragungsleitung. Aufgrund des Dämpfungsanteils der durch die Fehlanpassung bedingt und somit von der Leitungslänge unabhängig ist, ergibt sich ein weiterer Meßfehler. Dieser Fehler ist allerdings relativ klein.

Unter Verwendung einer bekannten Meßanordnung und Vorgabe genau bestimmter Frequenzverhältnisse wird eine für den Anwendungsbereich genaue Dämpfungsmessung ermöglicht. Dabei wird bei der selektiven Reflexionsmessung im Frequenzbereich zusätzlich der Impuls im Frequenzbereich zu höheren Frequenzen verschoben, um die Impulsverbreiterung durch Dispersion zu verringern.

Das erfindungsgemäß ausgestaltete Verfahren ermöglicht somit die Qualifizierung von Teilnehmeranschlußleitungen für neue Dienste (ISDN, ADSL, usw.) durch Messung der Dämpfung von der Vermittlungsstelle aus. Dies ermöglicht eine erhebliche Zeitersparnis bei räumlich stark ausgedehnten Leitungen, wobei sich bei sternförmigen Netzen die Messung mit nur einem Meßgerät und einem Meßstellenumschalter automatisieren läßt. Dieses Verfahren zur Dämpfungsmessung läßt sich dadurch auch mit deutlich geringerem Kostenaufwand durchführen und ist für den beabsichtigten Anwendungsbereich ausreichend genau, für den Fall extrem dämpfungsarmer und zusätzlich stark fehlangepaßter Leitung aber ungenau.

Nachfolgend wird die Erfindung anhand der begleitenden Zeichnungen näher erläutert. Es stellen dar:

Figur 1      eine typische Darstellung der Reflexionen im Zeitbereich mit einer Reflektionskurve und einer Dämpfungskurve,

Figur 2      die prinzipielle Darstellung eines vektoriellen Netzwerkanalysators und

Figur 3      die Darstellung von Testimpulsen.

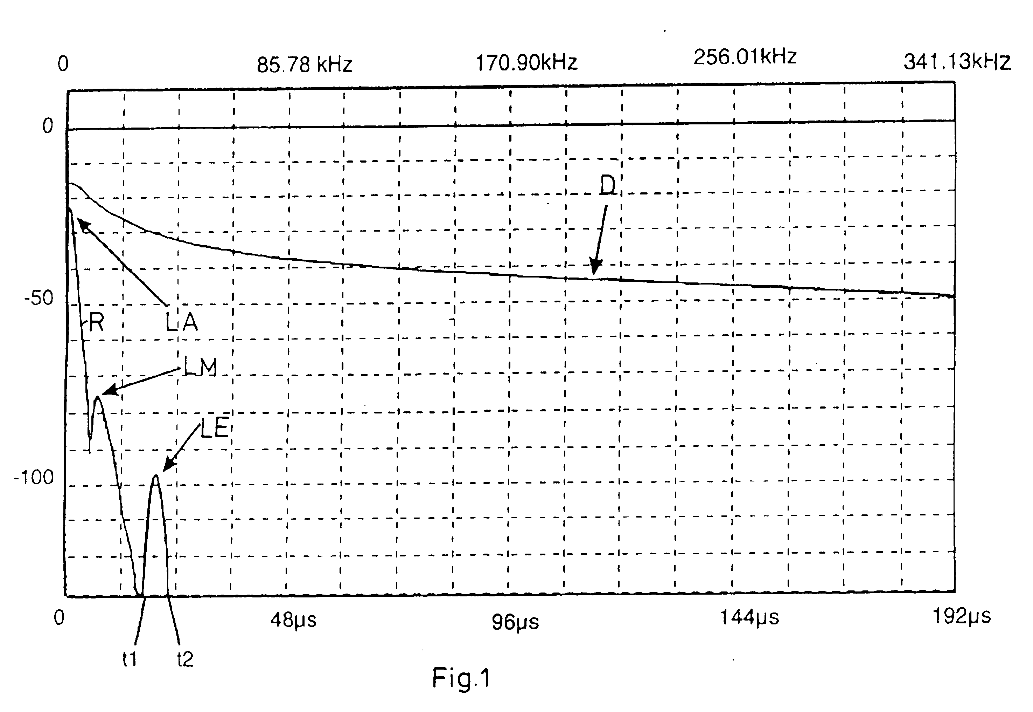

In Figur 1 ist die Reflexionskurve R über der Zeit dargestellt. Zur Bestimmung der Leitungsdämpfung wird die Reflexion LE am Leitungsende im Zeitintervall T1 bis T2 in den Frequenzbereich transformiert und das Frequenzspektrum mit dem Spektrum des Sendeimpulses verrechnet. Aus der Figur sind außerdem die Reflexion LA am Leitungsanfang und die Reflexion LM in der Leitungsmitte gekennzeichnet. Der Dämpfungsverlauf D in Abhängigkeit von der am oberen Bildrand dargestellten Frequenz aus der Reflexion am Leitungsende als Ergebnis dieser Verrechnung ist ebenfalls in der Figur dargestellt. Reflexionskurve R und Dämpfungskurve D haben eine gemeinsame Pegelskala von 10dB/Teilung.

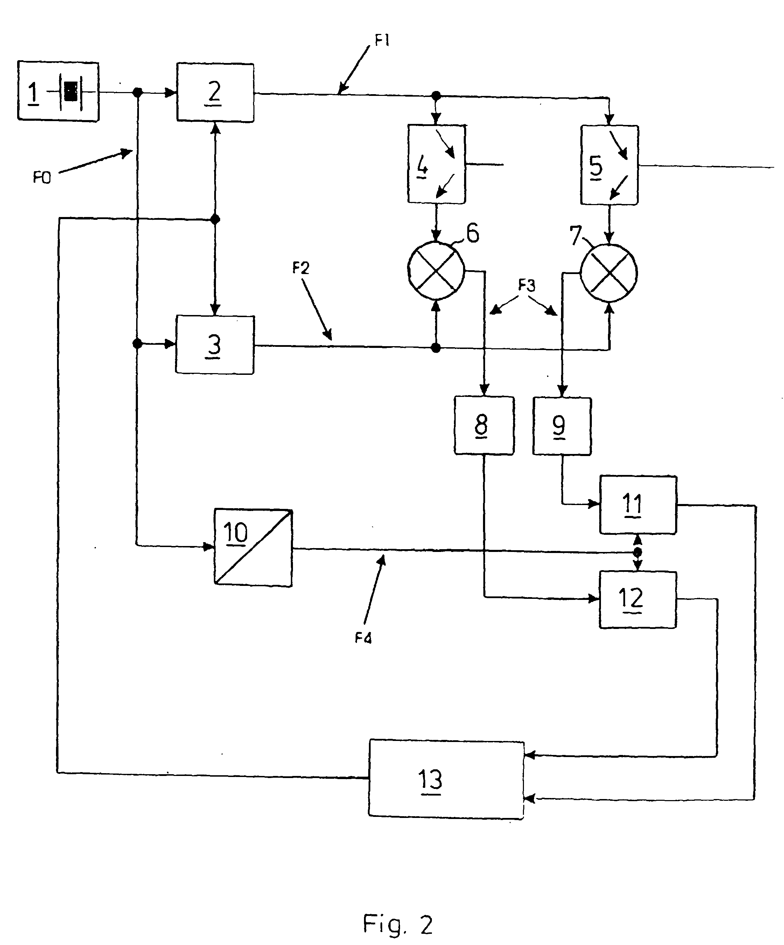

Zur Durchführung der Messung im Frequenzbereich ist eine Meßanordnung mit hoher Meßdynamik und Genauigkeit erforderlich. Dies wird an folgendem Zahlbeispiel deutlich: Wird bei einer bestimmten Frequenz eine Leitungsdämpfung von 50 dB angenommen, so ist das reflektierte Signal um 100 dB gegenüber dem Sendesignal gedämpft. Die Aufgabe besteht also darin, zwei Signale gleicher Frequenz in 100 dB Pegeldifferenz zu verarbeiten. Soll der Störabstand für das reflektierte Signal noch 20 dB betragen, müssen also Störungen einen Abstand von 120 dB zum Sendesignal haben. Prinzipiell eignet sich jeder vektorielle Netzwerkanalystor mit ausreichender Meßgenauigkeit und Dynamik zur Durchführung der Dämpfungsmessung nach dem oben beschriebenen Verfahren. Für die praktische Nutzung sind derartige Geräte doch zu groß und zu teuer. Eine Meßanordnung, welche besonders einfach und kostengünstig realisierbar ist und trotzdem den hohen Anforderungen genügt, wird in Verbindung mit der Figur 2 beschrieben.

In dieser Meßanordnung erzeugt ein Oszillator 1 ein Taktsignal mit einer Frequenz F0. Aus diesem Signal erzeugt ein erster Synthesizer 2 ein Signal mit der Frequenz F1. Dieses Signal wird zwei gleich aufgebauten Richtkopplem 4, 5 zugeführt. Der erste Richtkoppler 4 dient zur Erzeugung eines Referenzsignals. Sein Meßtor ist offen oder kurz geschlossen, so daß Totalreflektion auftritt. An das Meßtor des zweiten Richtkopplers 5 wird die zu messende Leitung angeschlossen. Die reflektierten Singale beider Richtkoppler 4, 5 werden den ersten Eingängen der zwei Mischer 6, 7 zugeführt. Aus dem Taktsignal mit der Frequenz F0 erzeugt ein zweiter Synthesizer 3 ein Signal mit der Frequenz F2, das den zweiten Eingängen der beiden Mischer 6, 7 zugeführt wird. Die Ausgangssignale der beiden Mischer 6, 7 werden mit der durch die Frequenzen F1 und F2 beeinflußten Frequenz F3 über zwei Tiefpässe 8, 9 entsprechend zwei Analog-Digital-Wandlem 11, 12 zugeführt. Aus dem Signal mit der Frequenz F0 wird mittels eines Frequenzteilers 10 ein Signal mit der Frequenz F4 erzeugt, welches beiden Analog-Digital-Wandlern 11, 12 zugeführt und als Abtasttakt dient. Sowohl die Verarbeitung der von den A/D-Wandlem 11, 12 gelieferten Werten als auch die Einstellung der Synthesizer 2, 3 erfolgt durch den Rechner 13. Als Meßwert wird das Verhältnis des von dem der Übertragungsleitung zugeordneten A/D-Wandlers 12 gelieferten Ergebnisses zu dem von dem Referenztor zugeordneten A/D-Wandler 11 gelieferten Ergebnisse ausgewertet. Außerdem werden Differenzen zwischen Meß- und Referenzpfad durch ein bei Netzwerkanalysatoren übliches nicht dargestelltes und dem Fachmann bekanntes Normalisier- und Korrekturverfahren unterdrückt.

Ein allgemeines Problem stellen die in beiden Synthesizern 2, 3 vorhandenen subharmonischen Seitenlinien des Nutzsignals dar, die bei konventionellen Anwendungen in Netzwerkanalysatoren keine wesentliche Einschränkung bedeuten, hier aber wegen der hohen Genauigkeitsanforderungen stören. Mit aufwendigen Schaltungskonzepten, die sie z. B. in Spektrumanalysatoren benutzt werden, lassen sich diese Störlinien verringern. In der hier beschriebenen Ordnung wird dagegen durch eine spezielle Wahl der Frequenz bewirkt, daß die weirehin vorhandenen Störlinien die Messung nicht beeinträchtigen.

Dazu wird ausgehend von der Taktfrequenz F0 eine Basisfrequenz F_Basis gewählt, die durch binäre Teilung aus F0 abgeleitet werden kann:

$$F\_Basis = F0/2^a.$$

Da F_Basis durch ganzzeilige Teilung aus F0 hervorgeht, ist sie frei von subharmonischen Seitenlinien. Die Frequenz F3 wird speziell so gewählt, daß sie als Potenz mit der Basis 2 aus F_Basis hervorgeht:

$$F3 = F\_Basis \times 2^c.$$

Als Frequenzen F1 und F2 werden nur ganzzahlige Vielfache von F_Basis benutzt:

$$F1 = F\_Basis \times b$$

$$F2 = F\_Basis \times b + F3 = F\_Basis \times (b + 2^c).$$

Damit ist sichergestellt, daß die beiden Signale ausschließlich Seitenlinien bei $\pm$ n x F_Basis aufweist Die Mischer 6, 7 erzeugen die beiden Seitenbänder (F2 - F1) und (F2 + F1). Das obere Seitenband (F1 + F2) wird durch die Tiefpässe 8, 9 sowie durch digitale Filter, welche in die A/D-Wandler 11,12 integriert sind, unterdrückt

Die Abtastfrequenz F4 wird durch binäre Teilung aus F0 erzeugt und ist damit frei von subharmonischen Seitenlinien:

$$F4 = F0/2^d.$$

Da die Verhältnisse zwischen: F0 und den drei Frequenzen F_Basis, F3 und F4. ausschließlich durch Potenzen mit der Basis 2 gebildet wird, ist auch das Verhältnis zwischen F4 und F3 eine Potenz mit der Basis 2, z.B. 4 oder 8. Außerdem ist das Verhältnis m = F4/F_Basis eine Zweierpotenz. Das Signal mit der Frequenz F3 wird m mal oder durch Zweierpotenzen gebildete Vielfache von m mal abgetastet Dadurch wird erreicht, daß nach der Fouriertransformation der Abstand der Frequenzlinien gerade F_Basis beträgt. Damit fallen die subharmonischen Störfrequenzen exakt auf diskrete Frequenzpunkte. Mit Ausnahme derjenigen Störlinien, die nach der Umsetzung gerade auf das Nutzsignal fallen, führen sie zu keiner Beeinflussung des Nutzsignals. Störlinien, die nach der Umsetzung genau auf F3 fallen, führen zwar zu einem konstanten Pegel- und Phasenfehler, aber nicht zu veränderlichen Störungen. Ihre Auswirkungen sind in Meß- und Referenzpfad in erster Näherung gleich und werden dadurch weitgehend eliminiert Für a, b, c und d können beliebige ganzzahlige Zahlen eingesetzt werden, wobei die Beschränkungen gelten:

$$2^{(a-c-d)} \geq 4 \text{ und } b < 2^{a-1} - 2^c.$$

Nur innerhalb dieser Grenzen können die vier Werte frei gewählt werden.

Mir den beschriebenen Maßnahmen ist es möglich, Synthesizer nach dem Prinzip der direkten digitalen Synthese (DDS) zu benutzen. In einem Ausführungsbeispiel könnten folgende Werte verwendet werden:

F0 = 25,6 Mhz
F_Basis = F0/2$^{18}$ = 97,65625 Hz
F3 = F_Basis x 2$^7$ = 12.500 Hz
F4 = F0/2$^9$ = 50 kHz
m = F4 durch F_Basis = 512
b = 25,75,125,....

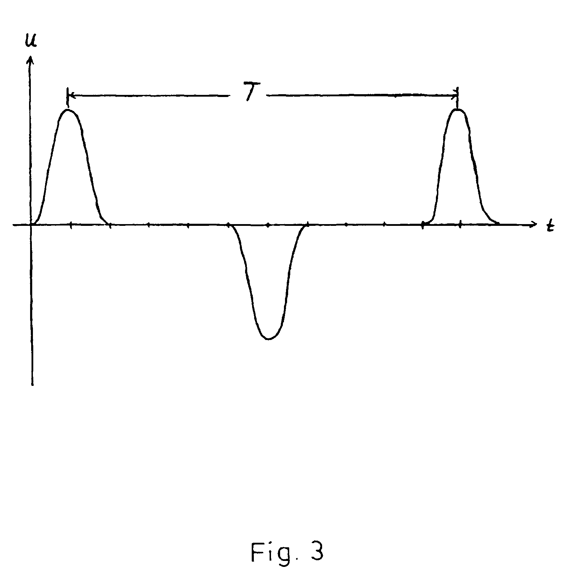

Der - gedachte, da tatsächlich im Zeitbereich nicht abgesandte - Testimpuls wird durch sein Frequenzspektrum beschrieben. Die Wiederholrate, die für die endliche Darstellung eines Impulses in einem diskreten Spektrum erforderlich ist, ist so gewählt, daß die Periodendauer T = 1/ 1/(F_Basis x 25) gilt. Zwischen zwei derartigen Impulsen kommt ein weiterer formgleicher, aber inverser Impuls, wie in Figur 3 dargestellt. Durch den negativen und positiven Impuls kann aus praktischen Gründen auf die geradzahligen Vielfachen der Grundfrequenz verzichtet werden (daher b = 25, 75, 125,....). Damit läßt sich das Spektrum durch die oben genannte Frequenzen beschreiben. Die Impulsform bestimmt die Amplituden der einzelnen Spektrallinien. Bei den Frequenzen entsprechend dem Spektrum des Impulses wird jeweils die Reflexion der Leitung selektiv nach Betrag und Phase gemessen. Nach Gewichtung durch eine geeignete Fensterfunktion erhält man die mit dem genannten Impuls meßbare Reflexion zunächst im Frequenzbereich. Durch die inverse Fouriertransformation erhält man die Reflexion im Zeitbereich. Hier wird jetzt die vom Leitungsende verursachte Reflexion ausgewählt und wieder in den Frequenzbereich transformiert. Während zunächst die Summe als Reflexion gemessen wurde, erhält man jetzt das Frequenzspektrum der ausschließlich vom Leitungsende verursachten Reflexion. Drückt man Pegel und Pegelverhältnisse in einem logarithmischen Maßstab aus, so gilt für jede einzelne Frequenz

Sendepegel - reflektierter Pegel = 2x Leitungsdämpfung + Reflexionsdämpfung am Leitungsende.

Am Leitungsende wurde aber Totalreflexion vorausgesetzt, also Reflexionsdämpfung = 0. Folglich entspricht die Differenz zwischen Sendepegel und reflektiertem Pegel der doppelten Leitungsdämpfung.

**Patentansprüche**

1. Verfahren zur Dämpfungsmessung in digitalen Übertragsleitungen zwischen einer Vermittlungsstelle und einer Teilnehmeranschlußstelle, bei dem

ein erster Impuls mit einem bekannten Frequenzspektrum in Form einzelner aufeinander folgender sinusförmiger Signale, deren Frequenz aus dem Frequenzspektrum des ersten Impulses zuvor ermittelt wird, von der Vermittlungsstelle aus auf die Übertragungsleitung gegeben wird,
aus der Vielzahl der an der Vermittlungsstelle eingehenden Reflexionen im Zeitbereich derjenige Impuls ausgewählt wird, der durch die Totalreflektion am Leitungsende einer bestimmten Teilnehmeranschlußstelle verursacht wurde, wobei die Reflexionen im Zeitbereich durch inverse Fouriertransformation des Frequenzspektrums dieser Reflexionen ermittelt werden, das Frequenzspektren des ausgewählten Impulses ermittelt und aus dem Frequenzspektrum des ausgesandten Impulses und des ausgewählten empfangenen Impulses die Dämpfung der Übertragungsleitung in Abhängigkeit von der Frequenz ermittelt wird,
unter Verwendung eines vektoriellen Netzwerkanalysators mit
einem Oszillator (1), der ein Taktsignal mit einer Frequenz F0 erzeugt,
einem ersten Synthesizer (2), der aus der Frequenz F0 ein Signal mit einer Frequenz F1 erzeugt, das zwei gleich aufgebauten Richtkopplern (4, 5) zugeführt wird, wobei der erste Richtkoppler (4) der Erzeugung eines Referenzsignales dient und dessen Meßtor offen oder kurz geschlossen ist und an dem zweiten Richtkoppler (5) die zu messende Übertragungsleitung angeschlossen ist,
zwei Mischern (6, 7), denen jeweils auf einem ersten Eingang die reflektierten Signale jeweils eines der Richtkoppler (4, 5) zugeführt wird,
einem zweiten Synethesizer (3), der aus der Frequenz F0 ein Signal mit der Frequenz F2 erzeugt, das den zweiten Eingängen der beiden Mischer (6, 7) zugeführt wird,
zwei Tiefpässen (8, 9), denen jeweils die Ausgangssignale der Mischer (6, 7) mit einer sich aus den Frequenzen F1 und F2 ergebenden Frequenz F3 zugeführt werden, und die in Reihe mit jeweils einem A/D-Wandler (11, 12) geschaltet sind,
einem Frequenzteiler (10), der das Taktsignal mit der Frequenz F0 teilt und ein Taktsignal mit der Frequenz F4 erzeugt, das als Abtasttakt für die AID-Wandler (11, 12) dient, und

eine Recheneinheit (13), die die Signale der A/D-Wandler (11, 12) empfängt und die Synthesizer (2, 3) einstellt, sowie die Dämpfung aus dem Verhältnis der von dem mit der Übertragungsleitung verbundenen A/D=Wandler (12) gelieferten Signale zu den Signalen des anderen A/D-Wandlers (11) ermittelt, wobei

ausgehend von der Frequenz F0 ieine Basisfrequenz F_Basis durch binäre Teilung auf F0 abgeleitet wird,

die Frequenz F3 so gewählt wird, daß sie als Zweierpotenz aus F_Basis hervorgeht,

als Frequenzen F1 und F2 nur ganzzahlige Vielfache von F_Basis benutzt werden,

die Frequenz F4 durch binäre Teilung aus F0 mit $F4 \geq 4 \cdot F3$ erzeugt wird, und

das Signal mit der Frequenz F3 mit der Abtastfrequenz F4 m mal mit der Bedingung $m = F4/F\_Basis \cdot 2^n$ und $n \geq 0$ abgetastet wird.

## Claims

1. A method for measuring the attenuation in digital transmission lines between a switching centre and a subscriber station, in which

a first pulse of a known frequency spectrum in the shape of individual sine-shaped signals whose frequency has previously been determined from the frequency spectrum of the first pulse is sent from the switching centre to the transmission line;

from the multitude of the reflections received by the switching centre in the time domain that pulse is selected which was caused by the total reflection at the end of the line of a certain subscriber station, whereby the reflections in the time domain are determined by inverse Fourier transformation of the frequency spectrum of these reflections;

the frequency spectrum of the selected pulse is determined and from the frequency spectrum of the outgoing pulse and the selected received pulse, the attenuation of the transmission line is determined, depending on its frequency;

by using a vectorial network analyser comprising an oscillator (1) generating a clock-pulse signal of a frequency F0;

a first synthesiser (2) which from the frequency F0 generates a signal of a frequency F1, said signal being fed to two identically constructed directional couplers (4, 5) with the first directional coupler (4) being used to generate a reference signal and with the measuring gate of said first directional coupler being open or briefly closed, and the transmission line to be measured being connected to the second directional coupler (5);

two mixers (6, 7) to each of which on a first input the reflected signals of one of the directional couplers (4, 5) is fed;

a second synthesiser (3) which from the frequency F0 generates a signal of the frequency F2 which signal is fed to the second inputs of the two mixers (6, 7);

two low passes (8, 9) to which the output signals of the mixers (6, 7) are fed at a frequency F3 resulting from the frequencies F1 and F2, with each of said low passes being switched in line with an A/D converter (11, 12);

a frequency divider (10) which shares the clock-pulse signal with the frequency F0 and which generates a clock-pulse signal of the frequency F4 which signal is used as a sampling cycle for the A/D converters (11, 12);

and a computer (13) which receives the signals of the A/D converters (11, 12) and adjusts the synthesisers (2, 3) and determines the attenuation from the relationship between the signals supplied by the A/D converter (12) allocated to the transmission line, and the signals of the other A/D converter (11), whereby, starting from the frequency F0, a base frequency F_base is derived to F0 by binary division;

the frequency F3 is selected in such a way that it results as a power of two from F_base;

only integral multiples of F_base are used as frequencies F1 and F2;

the frequency F4 is generated by binary division from F0 with $F4 = 4 \cdot F3$; and

the signal of the frequency F3 is sampled with the sampling frequency F4 m times with the condition m=F4/F base 2n and n = 0.

## Revendications

1. Procédé de mesure de l'affaiblissement sur des lignes de transmission numériques entre un central et un poste de raccordement d'abonné, selon lequel

une première impulsion avec un spectre de fréquences connu est envoyée par un central sur une ligne de transmission sous la forme de signaux sinusoïdaux individuels consécutifs dont la fréquence est auparavant calculée à partir du spectre de fréquences de la première impulsion,

on sélectionne parmi la pluralité de réflexions arrivant au central en domaine temporel l'impulsion qui a été provoquée par la réflexion totale en bout de ligne d'un poste de raccordement d'abonné donné, les réflexions étant déterminées en domaine temporel par transformation de Fourier inverse du spectre de fréquences leur correspondant,

on détermine le spectre de fréquences de l'impulsion sélectionnée et on calcule l'affaiblissement de la ligne de transmission en fonction de la fréquence à partir du spectre de fréquences de l'impulsion émise et de l'impulsion reçue sélectionnée,

ce en utilisant un analyseur de réseaux vectoriel avec

un oscillateur (1) qui génère un signal d'horloge de fréquence F0,

un premier synthétiseur (2) qui à partir de la fréquence F0 génère un signal de fréquence F1, lequel est amené à deux coupleurs directifs (4, 5) de même construction, le premier coupleur directif (4) servant à la génération d'un signal de référence, sa porte de mesure étant ouverte ou brièvement fermée et la ligne de transmission à mesurer étant reliée au second coupleur directif (5),

deux mélangeurs (6, 7) à une première entrée desquels sont amenés les signaux reflétés respectifs d'un des coupleurs directifs (4, 5),

un second synthétiseur (3) qui à partir de la fréquence F0 génère un signal de fréquence F2, lequel est amené aux secondes entrées des deux mélangeurs (6, 7),

deux filtres passe-bas (8, 9) auxquels sont respectivement amenés les signaux de sortie des mélangeurs (6, 7) à une fréquence F3 découlant des fréquences F1 et F2 et lesquels sont respectivement montés en série avec un convertisseur A/N (11, 12),

un démultiplicateur de fréquence (10) qui divise le signal d'horloge de fréquence F0 et génère un signal d'horloge de fréquence F4, lequel sert d'impulsion de balayage pour les convertisseurs A/N (11, 12), et

une unité de calcul (13) qui reçoit les signaux des convertisseurs A/N (11, 12) et règle les synthétiseurs (2, 3) de sorte que l'affaiblissement est calculé à partir du rapport entre les signaux fournis par le CAN (12) relié à la ligne de transmission et les signaux de l'autre CAN (11),

une fréquence de base F_base étant déduite à partir de F0 par division binaire de F0,

la fréquence F3 étant choisie de façon à résulter de F_base comme puissance deux,

des multiples entiers àe F_base seulement servant de fréquences F1 et F2,

la fréquence F4 étant produite par division binaire à partir de F0 avec $F4 \geq 4 \cdot F3$, et Le signal de fréquence F3 étant balayé m fois à la fréquence de balayage F4, ce à condition que m $= F4/F\_base \cdot 2^n$ et $n \geq 0$.

Fig.1

Fig. 2

Fig. 3